Europäisches Patentamt

(19) European Patent Office

Office européen des brevets

(11) Publication number: **0 009 938**
**B1**

(12) # EUROPEAN PATENT SPECIFICATION

(45) Date of publication of patent specification: **30.06.82**

(51) Int. Cl.³: **G 06 F 15/16, G 06 F 13/00**

(21) Application number: **79302032.2**

(22) Date of filing: **28.09.79**

(54) **Computing systems having high-speed cache memories.**

(30) Priority: **02.10.78 US 947791**

(43) Date of publication of application:
**16.04.80 Bulletin 80/8**

(45) Publication of the grant of the patent:
**30.06.82 Bulletin 82/26**

(84) Designated Contracting States:
**DE FR GB IT SE**

(56) References cited:
**US - A - 3 555 513**
**US - A - 3 735 360**
**US - A - 3 771 137**
**US - A - 4 056 844**
**US - A - 4 136 386**

(73) Proprietor: **SPERRY CORPORATION**
**1290, Avenue of the Americas**
**New York, N.Y. 10019 (US)**

(72) Inventor: **Baber, David James**
**22326 Blueberry Lane**
**El Toro, California 92630 (US)**
Inventor: **Waite, John Clarence**
**1630 Fernwood**
**Saint Paul, Minnesota 55108 (US)**

(74) Representative: **Michaels, Peter Albert**
**SPERRY UNIVAC Patent & Licensing Services**
**M.S. S2 W1 SPERRY UNIVAC CENTRE**
**London NW10 8LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Computing systems having high-speed cache memories

This invention relates generally to computing systems having high speed cache memories, and in particular to preventing ambiguous data in multi-requestor systems where each requestor has its own dedicated cache memory.

In a multi-requestor system in which each of the requestors has its own low capacity and low cycle time cache memory, and a main memory is shared by all of the requestors, a problem arises when the contents of a main memory location are resident in one cache memory and another requestor stores information into that location in the main memory, or into its own dedicated cache memory. If one of the requestors modifies that data word with a write operation, steps must be taken in order to preserve the integrity of the data, lest a requestor obtain a data word from its own dedicated cache memory which is no longer current because it has been updated by a different requestor.

Several methods of handling this problem exist in the prior art and may be characterised as "write-through," "post-write" and "write-by" cache memory systems. In a "write-through" system the write operation occurs in a given requestor's dedicated cache memory. The data word located in that cache memory is modified and at the same instant the data word having the same address in main memory is also modified. Thus, the modified data word is made available to all other requestors in the system so long as the requestors obtain that word from the main memory rather than from their dedicated cache memories. However, since the same data word may also be resident in the dedicated cache memories of other requestors, the system must provide a means either to modify the data word in those dedicated cache memories, or to notify those other requestors to obtain that particular data word from main memory and not from their dedicated cache memories.

In a "post-write" system, when a write operation occurs in an address which is resident in the writing requestor's dedicated cache memory the data word is modified in the cache memory but is not, at that time, modified in main memory. Later, for example when a least-recently-used or similar algorithm determines that a block which has been modified is to be replaced, the modified data word must be written into the main memory to preserve the integrity of the data within the system.

In the "write-by" cache memory approach, a write operation is effected in main memory but not in the writing requestor's own dedicated cache memory. Thus, not only must other requestor subsequently obtain their data word only from main memory, but so too must the writing requestor.

A general discussion of the foregoing cache buffer memory systems for a multi-requestor environment is described in the David L. Anderson, et al, U.S. patent No. 3 735 360, entitled "High Speed Buffer Operation In A Multiprocessing System" which is assigned to the International Business Machines Corporation. Reference may also be made to U.S. patent No. 4 056 844.

The present invention employs the known operation of notifying other requestors that data contained in their own dedicated cache memories is invalid as a result of a write operation performed by another requestor in another cache memory or in main memory. This involves "invalidating" data contained in a cache memory, so that that cache memory's own requestor, when accessing that particular data word, will not obtain that data word directly from its own cache memory but will instead obtain the updated data word from main memory. The object of the invention is to carry out this operation without degradation of memory speed. Note that the system described in the present invention will work whether the updated data word is stored in main memory either on a "write-through," "post-write" or "write-by" basis.

When one requestor performs a write operation on a data word in its dedicated cache memory, that requestor must then have access to all other dedicated cache memories in order to perform this invalidate operation. If the written data word is found in another cache memory, then that data word must be invalidated at that location. If the particular data word written into is not found in another cache memory, then no invalidate operation need be performed, but it still has been necessary to perform the search operation in order to ascertain that the written data word is not contained in the other cache memory.

A single cache memory comprises two basic parts, a data buffer and a tag buffer. The data buffer contains those data words which are held in the cache memory for fast access by that cache memory's own requestor. The tag buffer contained in the cache memory contains a list or a table of which data words are contained in the buffer. Thus, when a requestor wishes to access a particular data word it accesses the tag buffer and searches the list of data words available to ascertain whether that particular data word is resident in the data buffer. If a match is made in the tag buffer then the data word is accessed directly by the requestor from the data buffer. If a match does not occur in the tag buffer the requestor then must, either sequentially or concurrently with the access to its dedicated cache memory, request and obtain that data word from main memory.

In general, a requestor connected to its dedicated cache memory (a resident requestor) needs access to both the tag buffer and the data buffer in its dedicated cache memory. However, a requestor other than the requestor specifically dedicated to that cache memory (a non-resident requestor) needs access only to the tag buffer portion of the cache memory. This is because a non-resident requestor never accesses data words from another requestor's dedicated cache memory. The non-resident requestor is required to access only the tag buffer portion of the non-resident dedicated cache memory for the purpose of invalidating data words listed therein.

The present invention allows each requestor access to the tag buffer and data buffer of its dedicated cache memory, and to the tag buffer of cache memories of which it is not resident. When a resident requestor performs a write operation on a data word contained in its dedicated cache memory, that data word is written in the cache memory's data buffer, and may also, either at the same time or subsequently, be written into main memory. Also that requestor, either directly or through a central invalidation module for all non-resident requestors, must access every other tag buffer contained in all other cache memories in order to set an invalid semaphore in their tag buffers if the same data word is resident therein.

Since the tag buffer portion of a dedicated cache memory is generally constructed of memory modules having a much faster cycle time than the memory modules from which the data buffer is constructed, a resident requestor accessing its own cache memory must access both the tag buffer and the data buffer, and its cycle time in obtaining that request is governed by the cycle time of the longest memory unit, which will be the data buffer. If the tag buffer is significantly faster in operation than the data buffer, the resident requestor will finish with the tag buffer before the data buffer. The tag buffer is then available, in the latter part of the resident requestor's cycle, to service requests from non-resident requestors which need to search the tag buffer and perform an invalidate operation if this should be necessary.

By alternating the tag buffer cycles with resident and non-resident requestors the total cycle time of the resident requestor need not be increased, since it is governed by the data buffer cycle time which is longer than the tag buffer cycle time. Thus, non-resident requestors are serviced in the tag buffer without any degradation of performance.

The sequence of events which occurs is as follows:

First a resident requestor requiring to read a word from its dedicated cache memory accesses both the tag buffer and the data buffer of the cache memory. A comparison is made with the tag buffer addresses to ascertain whether the word requested is resident in the data buffer. If a match occurs, the resident requestor must then wait for the access time of the data buffer before obtaining that data word from the data buffer. Meanwhile, the addressing of the tag buffer is switched to a non-resident requestor. A comparison is made of the tag buffer addresses with the address supplied by the non-resident requestor, which will have written a data word having that address in its own cache memory, or in main memory.

If no match occurs, then this cache memory does not contain a copy of the word written by the non-resident requestor, and hence there is no need to invalidate any entry in its tag buffer. By this time the data buffer has completed the resident requestor's read operation and another resident requestor read operation is allowed. However, if a match has occurred in the non-resident requestor's access to the tag buffer, the data buffer is still complete at this time. So another request from a resident requestor is allowed at this time. However, as soon as the resident requestor has completed its second request to the tag buffer the same non-resident requestor is allowed access to the tag buffer and an invalidation operation is performed in the tag buffer so that when the resident requestor may desire to read that particular data word at a later time it will note that that data is invalidated and the resident requestor will have to obtain that data word from main memory, thus preventing the problem of ambiguous data due to multiple copies of words contained in separate dedicated cache memories.

The invention will be further described by way of example with reference to the accompanying drawings, in which:—

Figure 1 is a general block diagram illustrating a pair of requestors each with its dedicated cache memory, and with a shared main memory;

Figure 2 is a general block diagram illustrating the tag buffer and data buffer components of a cache memory;

Figure 3 represents an entry contained in one of the tag buffers of Figure 2;

Figure 4 is a diagram of the dedicated cache memory illustrating the hardware for multiplexing the address signals to the tag buffer in a dedicated cache memory; and

Figure 5 is a timing diagram showing timing control signals in connection with Figure 4.

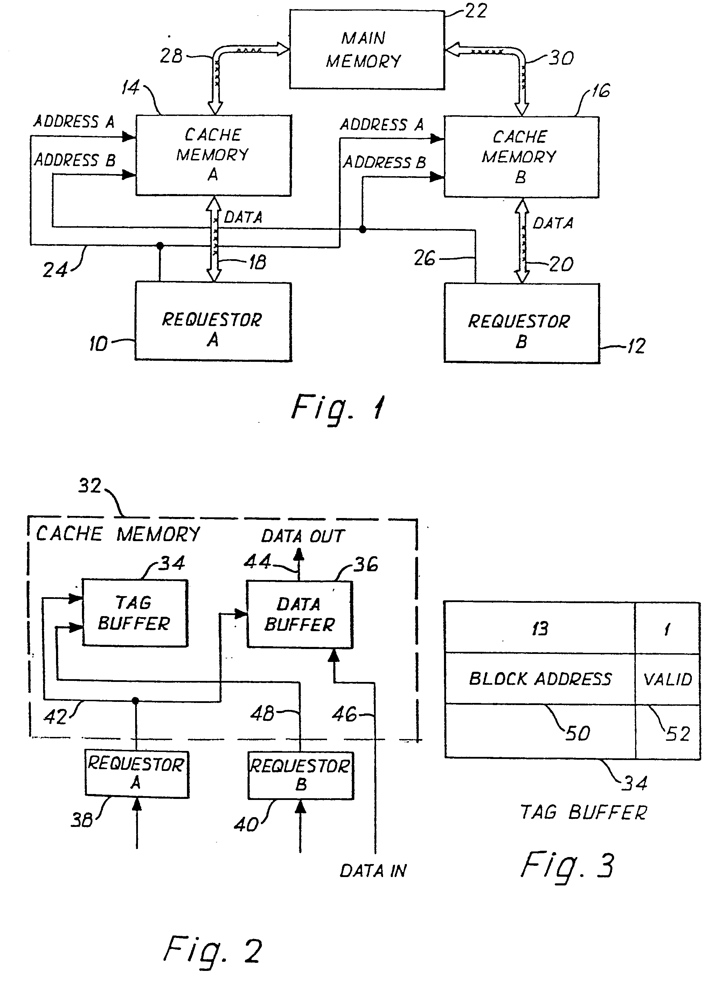

Figure 1 illustrates a dedicated cache memory system containing two requestors of data, A and B, referenced 10 and 12 respectively. Each has its own separate dedicated cache memory, 14, 16, to which it is connected by a data line 18, 20. The cache memories 14 and 16 are each also connected by data lines 28 and 30 to a large capacity, slower cycle time, main memory 22. Requestor A addresses its own dedicated cache memory 14 via address lines 24 and cache memory 16 via the same address lines 24. Similarly requestor B addresses its own cache memory 16 via address lines 26 and also addresses cache memory 14 via the same address lines 26.

In the system of Figure 1, requestor 10 obtains data words which are contained in its own separate dedicated cache memory unit A 14 instead of having to go directly to the larger capacity, but much slower, main memory 22. Requestor 10 has access to cache memory 16 but has no provision for obtaining data from it. The sole purpose of enabling requestor 10 to address cache memory 16 is to prevent the presence of ambiguous data should a particular data word be contained both in cache memory 14 and cache memory 16, and requestor 10, for example, writes into that data word in the cache memory 14. Then requestor 12 must be prevented from obtaining the outdated word contained in cache memory 16. Requestor 10 accesses cache memory 16 via address lines 24 to perform this invalidation. Similarly, requestor 12 also has access via address lines 26 to cache memory 14 for similar invalidation requests.

An alternative arrangement in accordance with the present invention is to have all non-resident requestors pass through a selector to have access to a dedicated cache memory instead of having each non-resident requestor have independent separate access to all dedicated cache memories. In this way only two access ports are required for each dedicated cache memory instead of an access port for each requestor. This alternative approach, however, requires a selection process among all non-resident requestors desiring access to a dedicated cache memory.

Figure 2 illustrates in simplified block diagram form the major components of one of the dedicated cache memory units 14 and 16, illustrated in Figure 1. The dedicated cache memory and main memory interfaces referred to in Figure 1 are not illustrated again in Figure 2 as these interfaces are of a kind known in the prior art.

The dedicated cache memory unit 32 in Figure 2 contains a tag buffer 34 and a data buffer 36. The data buffer 36 holds the data words contained within the cache memory unit 32, and the tag buffer 34 contains a list of the data words in the data buffer. Also illustrated are two requestors 38 and 40, each having a register holding the address being called for by the requestor. In this illustration requestor A, 38, is the resident requestor and requestor B, 40, is the non-resident requestor for the cache memory unit 32. The address held in the register of requestor 38 is applied via address lines 42 to both the tag buffer 34 and the data buffer 36. A search is made in the tag buffer to ascertain whether the data word having that particular address is contained in the data buffer 36. Upon a match in the tag buffer 34, the data word is read out from the data buffer 36 to the data output lines 44. If requestor A wishes to write a word in its dedicated cache memory unit 32, the address in its register is applied to the tag buffer 34 and the word is stored into the data buffer 36 along data input lines 46.

Requestor B of Figure 2 is the non-resident requestor, and so is allowed access only to the tag buffer portion 34 of the cache memory unit 32, for the purpose of searching the tag buffer 34 to ascertain whether a particular data word is contained in the data buffer 36 and, if so, for invalidating the entry. The address called for by Requestor B is transmitted along address lines 48 to the tag buffer 34.

As shown in Figure 2, a resident requestor, in this case requestor A, is allowed access to both the tag buffer 34 and data buffer 36 of its resident cache memory unit 32, while a non-resident requestor, in this case requestor B, is allowed access only to the tag buffer 34 of the cache memory unit 32.

Figure 3 shows a single entry in the tag buffer 34. The entry consists of two parts, a block address 50 and a valid entry 52. The block address 50 is utilised to ascertain if a match occurs between the requested data word and the data words resident in the data buffer portion of the cache memory unit, and the valid entry 52 is utilised to ensure that the data word contained in the data buffer has not been made ambiguous due to the write of the same data word in the other dedicated cache buffer.

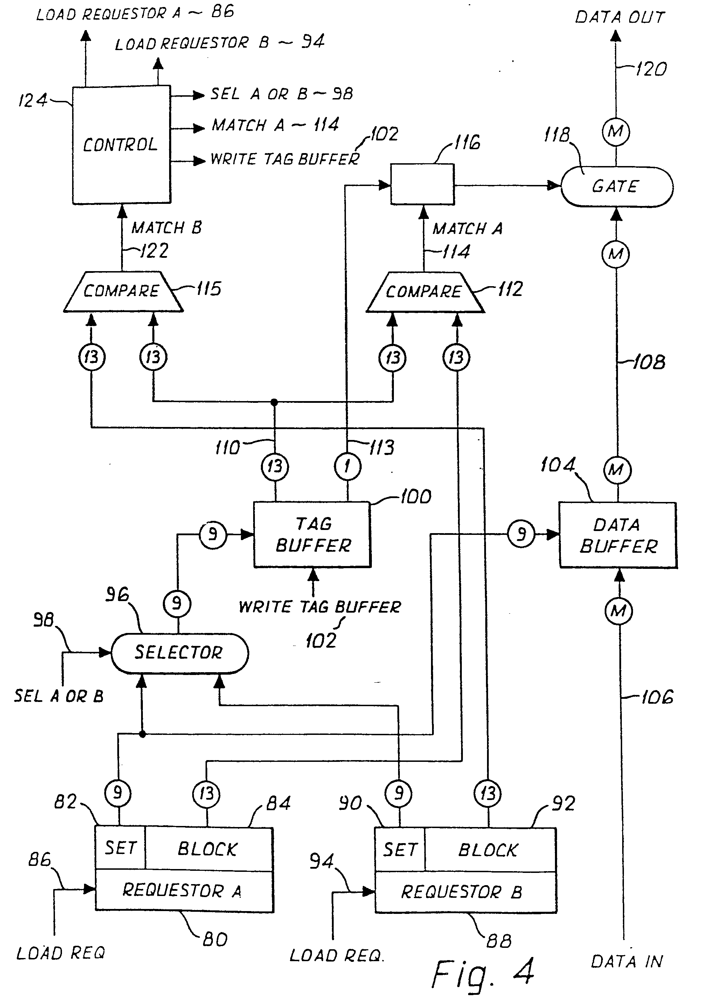

Figure 4 is a diagram of a cache memory showing the interface between the cache memory and the requestors servicing it. Again, as in the cache memory described in Figure 2, two requestors, A and B, have access to this cache memory, A being the resident, and B the non-resident, requestor. The address called for by requestor A is held in register 80, where it is divided into two portions, a set address 82 and a block address 84. In the particular example being considered, the set address 82 portion is nine bits long, and the block address portion 84 is of 13 bits. This requires a 22-bit register for holding the address called for by requestor A. Register 80 is controlled by a load register signal 86. Register 80 may be constructed from individual binary flip-flops, or from any of a number of commercially available register or latch circuits.

Register 88 holds the address called for by the non-resident requestor, requestor B, and is similarly separated into two portions, a set address portion 90 and a block address portion 92, similar in size to the corresponding portions of register 80. It is controlled by load register signal 94. The register 88 may be constructed from individual binary flip-flops or from any of a number of commercially available registers and latches.

Both the set address portion 82 of register 80 and the set address portion 90 of register 88 are applied to the inputs of a two-input selector 96, controlled by a select signal line 98. The selector 96 is a common binary two-input selector and may be constructed from NAND gates or commercially available two-input selectors. It passes either the nine-bit set address portion from either requestor A or requestor B to the address inputs of the tag buffer 100. The tag buffer 100 contains a block address and a 'valid' entry as illustrated in Figure 3. This tag buffer is a set associative memory unit and may be constructed from any of a number of commercially available set associative memory parts such as the Motorola MCM10152 or the Fairchild F10414. The tag buffer 100 is written by means of write tag buffer signal 102.

The set address portion 82 of register 80 is also applied directly to the address lines of the data buffer 104. This data buffer is a commonly available random access memory unit and any of a number of such random access memory units may be utilised for this purpose. Two examples of a random access memory circuit which may be utilised in this instance are the Motorola MCM10146 and Fairchild F10415. The data buffer 104 is written from the data input lines 106 coming from the data lines from requestor A and has as data output lines 108.

The block address portion 110 of the address in tag buffer 100 is sent to a comparator 112 along with the block address portion 84 of the address in register 80. Comparator 112 may be constructed from simple NAND circuits or any number of commercially available comparator circuits may be utilised for this circuit.

The comparator 112 compares the 13-bit block address 110 signal from the tag buffer 100 with the 13-bit block address portion 84 from requestor A address register 80, bit by bit. If all 13 bits match, the comparator 112 sends a match signal 114, which is then ANDed with the valid entry 113 from the tag buffer 100 and the result latched in flip-flop 116. The output of this flip-flop opens a gate 118 which allows the data from the data buffer 104 to pass from the cache memory unit to requestor A along data output lines 120.

So far the operation of the cache memory unit has been described when servicing a read request from requestor A and reading a data word from the data buffer based upon a match of the requestor A address in the tag buffer. This entire operation is completed with the control line 98 from selector 96 set so that selector 96 passes the set address portion 82 of the requestor A's address register 80. The set address portion 82 of requestor A's address register 80 is applied to the tag buffer 100 address lines and a 13-bit block address is obtained indicating which block of that set is resident in the data buffer, if any. This block address is then applied to comparator 112, together with the block address portion 84 of requestor A's address register 80. A favourable comparison there indicates a match between the requestor A's requested data word and a data word contained in the data buffer 84. Flip-flop 116 then allows a check of the valid entry 113 from the tag buffer 100 to ensure that the data word contained in the data buffer 104 is presently valid and has not been made ambiguous due to a write in another dedicated cache memory. The favourable presence of the valid entry 113 and the comparison signal 114 indicates that gate 118 will allow the data word to pass along data output line 120 to requestor A.

With the representative parts selected for the tag buffer 100 and the data buffer 104 the following timing estimates can be made. A tag buffer 100 constructed from the suggested circuitry will have a time delay of approximately 30 nanoseconds. Additionally, the comparison network 112 represents an approximate additional delay of 16 nanoseconds, resulting in a total delay to that point of approximately 46 nanoseconds. This may be compared with a delay through the data buffer 104 of approximately 50 nanoseconds. Additionally, approximately 35 nanoseconds is required in the gating circuit 118. Thus, the delay through the data portion of the cache memory unit is approximately 85 nanoseconds. It can be seen that the delay through the data portion, i.e., data buffer 104, is approximately twice the delay through the match portion of the circuitry, i.e., tag buffer 100, which approximates 46 nanoseconds. Thus, if the tag buffer 100 and the data buffer 104 are both accessed at approximately the same time, the tag buffer 100 will be available for approximately the last half of the cycle time required for the data buffer 104.

During this time the set address 90 from register B's address register 88 is applied through selector 96, control line 98 being set to pass requestor B's set address 90 to the tag buffer 100. In the tag buffer 100 another search is made and a 13-bit block address 110 is obtained. This 13-bit block address 110 is sent to comparator 115, separate from, but identical in function and construction to, comparator 112. Comparator 115 has as its other input the 13-bit block address 92 from requestor B's address register 88. Comparator 115 then compares these addresses, bit-by-bit, and outputs a match signal 122, which is sent to control circuitry 124 for further decision making process.

This represents one complete pass through the non-resident requestor's access to the tag buffer. Note that the approximate delays through the tag buffer reference portion from the non-resident requestor involves approximately the same delay as from the resident requestor, that is the 30 nanoseconds approximated through the tag buffer and the 16 nanoseconds approximated through the comparison network. It is to be emphasised that the resident requestor's access through the tag buffer and the non-resident requestor's access to the tag buffer may take place during approximately the same period of time as the resident requestor's access through the data buffer. Thus, requestor B is able to steal access to the tag buffer without degrading the performance of requestor A from its data buffer 104.

A match on line 122 indicates that requestor B has found another copy of the data word written in its own dedicated cache memory. This being the case it is necessary for requestor B to access the tag buffer 100 again in a subsequent cycle in order to change the valid entry 113 contained in the tag buffer 100. Once the valid entry 113 has been modified in the tag buffer 100 a subsequent request by requestor A for that particular data word will result in a negative setting of flip-flops 116, which will prevent the gating of the data word out from gate 118, and so will prevent the access of ambiguous data by requestor A.

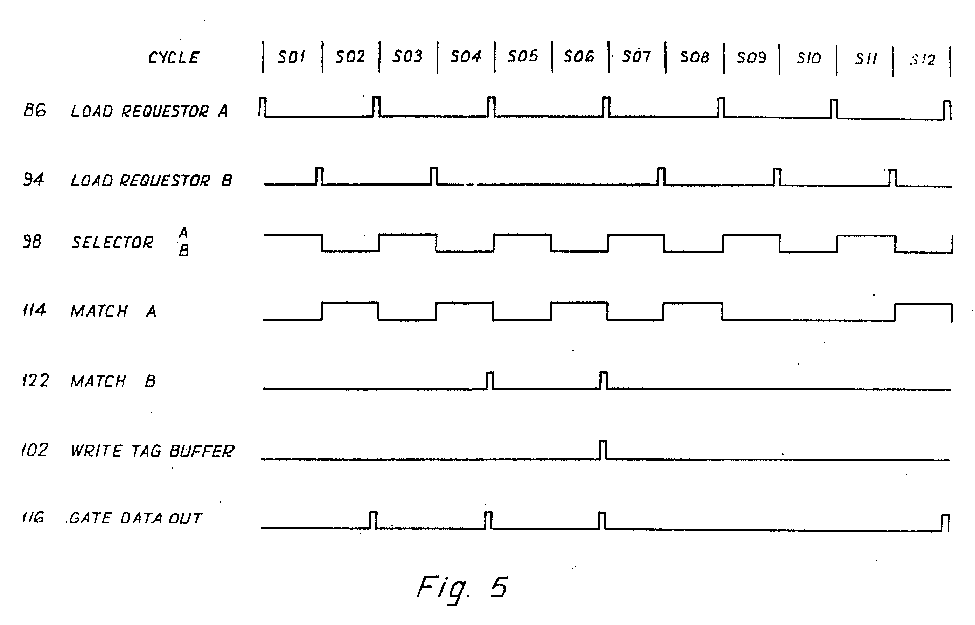

Figure 5 shows the control signals supplied by control block 124 in Figure 4. Twelve clock cycles are shown, 501 to 512.

One cycle of the clock e.g., cycle 501, represents the time required to pass through the tag buffer portion of the cache memory unit, or approximately one half of the time required to pass through the data buffer portion of the cache memory unit.

During each odd clock cycle, i.e., 501, 503, ... 511, the tag buffer is servicing requests from the resident requestor A, and the data buffer cycle is commenced. During the even clock cycles, i.e., 502, 504, ... 512, the tag buffer is servicing request from requestor B, i.e., from requestors which are attempting to search and or conduct an invalidate operation.

In cycle 501 the requestor A's address is loaded by load register signal 86 into register 80. At this time, selector signal 98 is set to select requestor A and set address 82 is applied to the tag buffer 100. Simultaneously, the set address 82 is also applied to the data buffer 104. The block address 110 obtained from the tag buffer is then compared, resulting in a favourable match on match signal 114, indicated at the end of cycle 501. This signal indicates that the data word requested by requestor A is resident in the data buffer 104. During cycle 502, since the tag buffer has now finished determining whether the data word requested by requestor A is resident in the data buffer 104, the selector signal 98 is selected to send set address 90 from requestor B to the tag buffer 100. As indicated by match signal 122 at the end of signal 502 a match was not found and hence the word searched by requestor B for possible invalidation is not present in the data buffer 104 and an invalidation need not be performed. Also by the end of cycle 502 the data buffer 104's access is completed and the data is gated out as illustrated by signal 116. Also at the end of cycle 502 a new address is loaded into requestor A's address register 80 via load register signal 86. This commences a new access round for requestor A. At this time note that selector signal 98 is set back to set address 92 for requestor A. The same process is repeated in cycle 503. Again, at the end of cycle 503 match signal 114 indicates that a match has occurred and the data word requested by requestor A is present in data buffer 104 once again. At the end of cycle 503 another address is loaded into register 88 via load register signal 84 representing a new address from the non-resident requestor, requestor B. During cycle 504, selector signal 98 is set, sending the set address portion 90 of requestor B's address to the tag buffer 100. At the end of cycle 504 match signal 122 indicates that there is a match between the requestor B's address and a data word contained in the data buffer 104. Thus, it will be necessary to perform an invalidate operation upon the tag buffer 100 in order to prevent the presence of ambiguous data. However, there is not time to conduct such an invalidation during this clock cycle 504. During clock cycle 505 another request is loaded into requestor A's address register 80 via load register signal 86 and again another match is obtained on match signal 114 at the end of cycle 505. During cycle 506, since an invalidation operation is still required in the tag buffer 100, instead of servicing a new access request from requestor B, a load requestor B address signal 94 does not occur, and the address that was contained in cycle 504 is retained for the invalidate operation during cycle 506. With the selector signal 98 again set back to requestor B, a comparison in comparator 115 need not be performed again, since that comparison operation was performed during cycle 504. Instead, during cycle 506, it is only necessary to operate the invalidate portion of the cycle by triggering write tag buffer signal 102, which will change the valid entry 113 in the tag buffer 100 for the selected address. This is accomplished by the end of cycle 506, and cycle 507 again begins a new request from requestor A and the selector 98 is sent back to requestor A.

Assume now that the address requested by requestor A at the beginning of cycle 507 is that particular data word which has just been invalidated during cycle 506 by requestor B. In this case the comparator 112 still indicates a match between the block address 110 contained in the tag buffer 100 and the block address 84 contained in requestor A's address register 80. However, the valid entry 113 is not present, and the gate out signal from flip-flop 116 is not present, so that the data contained in the data buffer 104, which is now obsolete, is not gated out to requestor A.

During cycle 508 a new request is serviced from requestor B from a potential invalidate operation. Since match signal B 122 shows no further matches between requested addresses and the locations in the data buffer no further invalidate operations are required to be performed. During cycle 509 requestor A again requests a new address from the tag buffer and this time match signal 114 indicates that there is no match, indicating that the particular word requested is not contained in the data buffer 104. Cycle 510 represents another request from requestor B for a possible invalidate operation, however no match is found. Cycle 511 represents a new request for a new data word from requestor A, and again a match is found and that word is gated out at the end of cycle 512.

With the illustration of the timing sequence and timing diagrams of the control signals and with reference to the specific logic circuitry contained in Figure 4 it should be clear how the apparatus of the present invention time multiplexes requests from the resident requestors obtaining data words from the data buffer contained in the cache memory unit with invalidate requests requiring only the tag buffer from non-resident requestors desiring to avoid ambiguous data in the dedicated cache memory unit system.

## Claims

1. A computing system comprising a plurality of requestors (10, 12), a large capacity main memory (22), and a small high speed cache memory (14, 16) dedicated to each requestor, each cache memory comprising a data buffer (36) storing data words and a tag buffer (34) storing the addresses of data in the data buffer together with a valid entry (52) for each address, data bus means (42, 46) for the transfer of data between each requestor and its dedicated cache memory and between each cache memory and the main memory, and address bus means (48) for conveying address data between each requestor and the tag buffers of its non-dedicated cache memories, characterised in that the tag buffer (100, Figure 4) has a substantially shorter cycle time than the data buffer (104), and multiplexing means (80, 88, 96) is provided whereby after each access of the tag buffer (100) by its resident requestor (requestor A) and during the remaining cycle time of the data buffer (104) the tag buffer may be addressed by at least one non-resident requestor (Requestor B) to change the valid entry (52) of data having a matching address, and so invalidate the data in the cache memory.

2. A computer system according to claim 1 having two requestors and in which the main memory and the cache memory are sub-divided into sets, characterised in that the multiplexing means comprises an address register (80) for holding an address from the resident requestor, an address register (88) for holding an address from the non-resident requestor, and a selector (96) arranged to present the set portions (82, 90) of the addresses in the registers (80, 88) in turn to the tag buffer (100).

## Patentansprüche

1. Rechensystem mit mehreren anfordernden Geräten (10, 12), mit einem Hauptspeicher (22) von umfangreicher Kapazität, mit einem jedem anfordernden Gerät zugeordneten, mit hoher Geschwindigkeit arbeitenden Zwischenspeicher (14, 16), der einen Datenpufferspeicher (36) zur Aufbewahrung von Datenwörtern und einen Anzeigepufferspeicher (34) zur Aufbewahrung der Adressen der im Datenpufferspeicher vorhandenen Daten gemeinsam mit einem für jede Adresse vorgesehenen Gültigkeitsbit (52) enthält, mit Datenschienen (42, 46) zur Übertragung von Daten zwischen jedem anfordernden Gerät und seinem zugeordneten Zwischenspeicher und zwischen jedem Zwischenspeicher und dem Hauptspeicher und mit Adressenschienen (48) zur Beförderung der Adreßdaten zwischen jedem anfordernden Gerät und den Anzeigepufferspeichern der ihm nichtzugeordneten Zwischenspeicher, dadurch gekennzeichnet, daß der Anzeigepufferspeicher (100, Figur 4) eine wesentlich kürzere Zykluszeit als der Datenpufferspeicher (104) aufweist, und daß Multiplex-Schaltungen (80, 88, 96) vorgesehen sind, von denen nach jedem Zugriff des ständig zugewiesenen anfordernden Gerätes (anfordernden Gerätes A) auf seinen Anzeigepufferspeicher (100) und während der restlichen Zykluszeit des Datenpufferspeichers (104) der Anzeigepufferspeicher von zumindest einem nichtständig zugewiesenen anfordernden Gerät (anfordernden Gerät B) adressiert werden kann, um das Gültigkeitsbit (52) der Daten mit einer übereinstimmenden Adresse zu ändern und somit die Daten im Zwischenspeicher ungültig zu machen.

2. Rechensystem nach Anspruch 1 mit zwei anfordernden Geräten, bei dem der Hauptspeicher und der Zwischenspeicher in Sätze unterteilt sind, dadurch gekennzeichnet, daß die Multiplex-Schaltungen ein Adressen-Register (80) zum Festhalten einer Adresse aus dem ständig zugewiesenen anfordernden Gerät, ein Adressen-Register (88) zum Festhalten einer Adresse aus dem nichtständig zugewiesenen anfordernden Gerät und einen Wähler (96) enthalten, über den Satzkennteile (82, 90) der Adressen in den Registern (80, 88) ihrerseits dem Anzeigepufferspeicher (100) dargeboten werden.

## Revendications

1. Système de calcul comprenant une pluralité de demandeurs (10, 12), une mémoire principale de grande capacité (22), et une petite mémoire tampon rapide (14, 16) consacrée à chaque demandeur, chaque mémoire tampon comprenant un tampon de données (36) stockant des mots de données et un tampon d'étiquettes (34) stockant les adresses des données dans le tampon de données avec une inscription valable (52) pour chaque adresse, des bus de données (42, 46) permettant de transférer des données entre chaque demandeur et sa mémoire tampon consacrée et entre chaque mémoire tampon et la mémoire principale, et des bus d'adresses (48) permettant de transmettre des données d'adresses entre chaque demandeur et les tampons d'étiquettes de ces mémoires tampon non consacrées, caractérisé en ce que le temps de cycle du tampon d'étiquettes (100, figure 4) est sensiblement plus court que celui du tampon de données (104), des moyens de multiplexage (80, 88, 96) étant prévus pour que, après chaque accès au tampon d'étiquettes (100) par son demandeur résident (demandeur A) et pendant le reste du temps de cycle du tampon de données (104), le tampon d'étiquettes puisse être adressé par au moins un demandeur non résident (demandeur B) pour modifier l'inscription valable (52) de données ayant une adresse concordante et pour invalider de ce fait les données contenues dans la mémoire tampon.

2. Système selon la revendication 1 comprenant deux demandeurs et dans lequel la mémoire principale et la mémoire tampon sont subdivisées en groupes, caractérisé en ce que les moyens de multiplexage comprennent un registre d'adresses (80) destiné à conserver une adresse provenant du demandeur résident, un registre d'adresses (88) destiné à conserver une adresse provenant du demandeur non résident et un sélecteur (96) adapté pour présenter les parties (82, 90), représentant des groupes, des adresses contenues dans les registres (80, 88) à tour de rôle au tampon d'étiquettes (100).

0 009 938

Fig. 1

Fig. 2

Fig. 3

Fig. 4

Fig. 5